# EUROPÄISCHE PATENTSCHRIFT

(11) **EP 0 388 706 B1**
(45) Veröffentlichungstag und Bekanntmachung des Hinweises auf die Patenterteilung: **15.06.1994**
(21) Anmeldenummer: 90104297.8
(22) Anmeldetag: 07.03.1990
(51) Int. Cl.: B44C 1/22, B28B 11/08, B44C 3/00

(54) **Platte mit einer weissen und einer farbigen Schicht zur Herstellung eines Reliefbildes**
Plate with a white and coloured layer for the manufacturing of a relief picture
Plaque avec une couche blanche et une couche de couleur pour la fabrication d'une image en relief

(30) Priorität: 22.03.1989 DE 3909459
(43) Veröffentlichungstag der Anmeldung: 26.09.1990
(73) Patentinhaber: Villeroy & Boch Aktiengesellschaft, D-66693 Mettlach (DE)
(72) Erfinder:
(74) Vertreter: Bernhardt, Winfrid, Dr.-Ing.

(56) Entgegenhaltungen:
- CH-A- 267 901
- DE-A- 3 425 865
- DE-A- 3 607 950
- GB-A- 943 460
- GB-A- 2 063 849

## Beschreibung

Die Erfindung betrifft eine Platte mit einer weißen und einer farbigen Schicht zur Herstellung einer Gemme oder Kamee durch unterschiedliches Abtragen der weißen Schicht stellenweise bis zum Durchscheinen oder Freiliegen der farbigen Schicht.

Die derzeit im Schmuckgeschäft als Medaillons vorherrschenden Gemmen und Kameen sind aus Achaten gearbeitet. Sie sind zweifarbig: Die weiße Schicht wird solchermaßen unterschiedlich abgetragen, daß sie stellenweise weiß bleibt, stellenweise die farbige Schicht, unterschiedlich stark, durchscheinen läßt und ggf. stellenweise die farbige Schicht ganz frei liegt.

Die weiße Schicht wird heute durch Ultraschallbehandlung abgetragen.

Nachteilig sind bei dieser Herstellung vor allem gefärbte Einschlüsse in der weißen Schicht. Sie sind anfänglich nicht wahrnehmbar. Kommen Sie zutage, muß die angefangene und ggf. schon weit fortgeschrittene Arbeit verworfen werden. Auch fließende Übergänge zwischen der weißen und der schwarzen Schicht stören; der Übergang muß möglichst scharf sein.

Der Erfindung liegt die Aufgabe zugrunde, ein geeignetes Plattenmaterial für die Herstellung solcher Reliefbilder zur Verfügung zu stellen.

Gemäß der Erfindung besteht die Platte aus Porzellan oder porzellanähnlichem Material.

In diesem Material läßt sich Achat ohne störend sichtbaren Unterschied nachbilden. Dabei können die im natürlichen Material vorhandenen Fehler und Unzulänglichkeiten vermieden werden.

Die Herstellung dreidimensionaler Reliefbilder nach Art von Gemmen oder Kameen ist zu unterscheiden von der Dekorierung keramischer Erzeugnisse, bei der das Erzeugnis als solches die dreidimensionale Gestalt aufweist und die Dekorierung, auch wenn sie eine gewisse Tiefe hat, auf die Oberfläche des Erzeugnisses beschränkt ist und als Flächenbild gilt.
So ist aus der CH-A-267 901 die Verfahrensweise bekannt, eine Porzellanvase o. dgl. mit einem Dekorschliff zu versehen wie Kristallglas. Hat die Vase eine farbige Glasur, so trägt der Schliff die Glasur ab, und es erscheint in der farbigen Glasurfläche das weiße Porzellan, je nach Schräge der Schliffläche in der Dicke der Glasurschicht mit einem entsprechenden Übergang.

Aus der DE-A-3 607 950 ist eine Herstellung von Namensschildern o.a. aus Keramik bekannt, bei der eine Tonplatte durch Eintauchen in oder Besprühen, Übergießen oder Überrollen mit einer Engobe oder einem dünnen Schlicker eines andersfarbigen Tons beschichtet wird und gleichfalls die graphische Gestaltung durch Wegschleifen der Beschichtung erfolgt.

Als für die Erfindung besonders geeignet wird ein Material vorgeschlagen, in dem die Glasphase weitgehend auf Phosphat-Basis gebildet ist.
Solche Materialien haben eine ausgeprägte Transparenz, so daß die weiße Schicht die farbige Schicht besonders gut durchscheinen läßt.
Als die betreffende Mischungskomponente im Ausgangsmaterial wird verglühtes Tri- oder Dikalziumphosphat vorgeschlagen.
Man hat es jedoch auch mit dem Anteil der Glasphase in der Hand, die gewünschte Transparenz zu erzeugen.

Das Material der weißen Schicht und der farbigen Schicht wird man möglichst gleich wählen, etwa für die farbige Schicht lediglich beispielsweise 4 - 6 % Farbkörper hinzufügen. Soweit die Farbkörpermasse jedoch die entscheidenden Eigenschaften der Schicht verändert, kann mit bekannten Mitteln für Ausgleich gesorgt werden.

Als besonders vorteilhafte Verfahrensweise zum Herstellen einer Platte nach der Erfindung wird vorgeschlagen, daß die weiße Schicht und die farbige Schicht im Vorzustand der keramischen Ausgangsmassen getrennt erzeugt werden durch Trockenpressen einer Platte ohne Farbkörper und einer Platte mit Farbkörper und daß die beiden Platten dann zusammengepreßt werden und die so zusammengesetzte Platte gebrannt wird.

Trotz der getrennten Herstellung der beiden Platten führt diese Verfahrensweise zu einem vollständigen Verwachsen der beiden Schichten im Brand unter Bildung einer Übergangsschicht, die andererseits nicht zu dick ist. Der benötigte Preßdruck beträgt nur 0,6 bis 1 MPa (6 bis 10 bar).

Unter Anwendung eines Preßdruckes von 10 bis 20 MPa (100 bis 200 bar) kann man auch aus einem Sprühkorn erst die eine Schicht und dann die andere in Anlage an der ersten pressen, jeweils mit einer Vorpressung unter geringerem Druck und Entlüftung.

Im folgenden sei die Erfindung anhand von Ausführungsbeispielen weiter erläutert:

### Beispiel 1:

Es wird eine Mischung hergestellt aus
40% verglühtem Dikalziumphosphat
40% Nephelinsyenit
20% Kaolin SB.

Die Mischungsbestandteile sind vorher getrennt durch Naßmahlung aufgemahlen und dann sprühgetrocknet worden.

Aus einem Teil der Masse werden kreisrunde Platten von 42 mm Durchmesser und etwa 1,5 mm Dicke gepreßt. Die Feuchtigkeit der Masse beträgt 4 - 6 %, der Preßdruck 0,6 bis 1 MPa (6 bis 10 bar).

Ein anderer Teil der Masse wird mit 5% Farbkörpermasse z.B. blau, schwarz oder rot versetzt, im letzteren Falle in bekannter Weise zusätzlich mit einem Flußmittel, wie Natronfeldspat. Aus der so erhaltenen Masse werden in gleicher Weise Platten gepreßt wie aus der Masse ohne Farbkörper.

Eine Platte mit und eine Platte ohne Farbkörper werden dann, noch einmal mit einem Preßdruck von 0,6 bis 1 MPa (6 bis 10 bar), zusammengepreßt und später bei 1210°C gebrannt. Man erhält eine vollkommen dichte, verglaste Platte, die nach Schleifen und Polieren das Aussehen einer natürlichen Achatplatte hat und aus der die Schmuckindustrie in gleicher Weise ein Medaillon oder eine Gemme schneiden kann wie aus natürlichem Achat.

Die Zusammensetzung der Mischung könnte abgewandelt werden in den Bereichen
35 - 45 % verglühtes Dikalziumphosphat,
30 - 50 % Nephelinsyenit,
15 - 25 % Kaolin SB oder New Zealand China Clay.

### Beispiel 2:

Es wird eine Mischung hergestellt aus
40 % verglühtem Dikalziumphospat
60 % Flußmittel 10123 Degussa
oder
Glasur 5305 (getrübte weiße Zirkonglasur).

Die übrige Verfahrensweise ist die gleiche wie im Beispiel 1, jedoch beträgt die Brenntemperatur 1000°C.

### Beispiel 3:

Es wird eine Mischung hergestellt aus
19,90 % Zettlitzer Kaolin oder New Zealand China Clay
6,97% Kaolin Meka
12,93 % Kaolin 201
4,98 % Kaolin Sp
39,80 % Pegmatit Gottfried
9,95 % Feldspat FS 90
4,97 % Ton 668
0,50 % Dolomit RF 100.

Die übrige Verfahrensweise ist die gleiche wie im Beispiel 1, jedoch beträgt die Brenntemperatur 1380°C.

## Patentansprüche

1. Platte mit einer weißen und einer farbigen Schicht zur Herstellung einer Gemme oder Kamee durch unterschiedliches Abtragen der weißen Schicht stellenweise bis zum Durchscheinen oder Freiliegen der farbigen Schicht,
dadurch gekennzeichnet,
daß beide Schichten der Platte aus Porzellan oder einem porzellanähnlichen Material bestehen.

2. Verfahren zum Herstellen einer Platte nach Anspruch 1,
dadurch gekennzeichnet,
daß die weiße Schicht und die farbige Schicht im Vorzustand der keramischen Ausgangsmassen getrennt erzeugt werden durch Trockenpressen einer Platte ohne Farbkörper und einer Platte mit Farbkörper und daß die beiden Platten dann zusammengepreßt werden und die so zusammengepreßte Platte gebrannt wird.

3. Verwendung einer Platte nach Anspruch 1, insbesondere einer nach Anspruch 2 erzeugten Platte, zur Herstellung eines Medaillons.

## Claims

1. Plate with a white and a coloured layer for the manufacture of a relief or a cameo by the varying removal of the white layer in places until the coloured layer shows through or is exposed, characterized in that the two layers of the plate consist of porcelain or of a porcelain-like material.

2. Process for manufacturing a plate according to Claim 1, characterized in that the white layer and the coloured layer are produced separately, in the preliminary state of the ceramic starting materials, by the dry pressing of a plate without pigment and of a plate with pigment, and in that the two plates are then pressed together and the plate thus pressed together is baked.

3. Use of a plate according to Claim 1, especially of a plate produced according to Claim 2, for manufacturing a medallion.

## Revendications

1. Plaque comportant une couche blanche et une couche de couleur pour la fabrication d'une gemme ou d'un camée par enlèvement différentiel de la couche blanche, localement jusqu'à faire transparaître ou libérer la couche de couleur,
caractérisée en ce que les deux couches de la plaque consistent en de la porcelaine ou en un matériau semblable à la porcelaine.

2. Procédé pour la fabrication d'une plaque selon la revendication 1,
caractérisé en ce qu'on fabrique la couche blanche et la couche de couleur séparément dans l'état préalable des masses céramiques de départ par pressage à sec d'une plaque sans agent colorant et d'une plaque avec agent colorant, et en ce qu'on assemble ensuite les deux plaques par compression pour alors soumettre la plaque combinée ainsi comprimée à la cuisson.

3. Utilisation d'une plaque selon la revendication 1,
notamment fabriquée selon la revendication 2, pour la fabrication d'un médaillon.
